# EUROPEAN PATENT APPLICATION

(11) **EP 4 296 327 A1**
(43) Date of publication of application: **27.12.2023**
(21) Application number: 22755818.6
(22) Date of filing: 20.01.2022
(51) Int. Cl.: C09J 11/06, C09J 105/00, C09J 7/38, C08B 37/00

(54) **ADHESIVE COMPOSITION AND ADHESIVE TAPE**

(30) Priority: 22.02.2021 JP 2021026402
(71) Applicant: Nitto Denko Corporation, Ibaraki-shi Osaka 567-8680 (JP)
(72) Inventor: KUMADA, Tatsuya, Ibaraki-shi, Osaka 567-8680 (JP); OGINO, Yoshiko, Ibaraki-shi, Osaka 567-8680 (JP); HARA, Yusuke, Ibaraki-shi, Osaka 567-8680 (JP); NAITO, Tomonari, Ibaraki-shi, Osaka 567-8680 (JP)
(74) Representative: Müller-Boré & Partner Patentanwälte PartG mbB
(86) International application number: PCT/JP2022/001956
(87) International publication number: WO 2022/176494

(57) **Abstract**

SOLUTION: The adhesive composition contains a β-1,3-glucan derivative having a degree of substitution of the acyl group of 2.6 or more and less than 3.0, and an isocyanate-based crosslinking agent. The pressure-sensitive adhesive tape includes a pressure-sensitive adhesive layer formed from the adhesive composition.

## Description

### TECHNICAL FIELD

The present invention relates to an adhesive composition and a pressure-sensitive adhesive tape.

### BACKGROUND ART

There has been known an adhesive composition containing a β-1,3-glucan derivative obtained by introducing an acyl group into β-1,3-glucan (ref: for example, Patent Document 1 below). The adhesive agent disclosed in Patent Document 1 containing a β-1,3-glucan derivative having a degree of substitution of the acyl group of 2.5.

### Citation List

### Patent Document

Patent Document 1: Japanese Unexamined Patent Publication No. 2018-154723

### SUMMARY OF THE INVENTION

### PROBLEM TO BE SOLVED BY THE INVENTION

In recent years, a higher level of adhesive strength has been required. However, the adhesive composition described in Patent Document 1 still cannot satisfy the above-described requirement.

Further, adhesive compositions are required to have higher holding power under a high temperature atmosphere. When the holding power under a high temperature atmosphere is high, after a predetermined period of time has elapsed since an adherend is adhered under such a high temperature atmosphere, a distance at which the adherend is displaced is short. The adhesive composition described in Patent Document 1 still cannot satisfy the above-described requirement.

The present invention provides an adhesive composition and a pressure-sensitive adhesive tape that have high adhesive strength and that also have high holding power under a high temperature atmosphere.

### MEANS FOR SOLVING THE PROBLEM

The present invention (1) includes an adhesive composition containing a β-1,3-glucan derivative obtained by introducing an acyl group into β-1,3-glucan, the β-1,3-glucan derivative having a degree of substitution of the acyl group of 2.6 or more and less than 3.0; and an isocyanate-based crosslinking agent.

The present invention (2) includes the adhesive composition described in (1), in which the isocyanate-based crosslinking agent is at least one selected from the group consisting of an adduct-type isocyanate-based crosslinking agent, an isocyanurate-type isocyanate-based crosslinking agent, and an allophanate-type isocyanate-based crosslinking agent.

The present invention (3) includes the adhesive composition described in (1) or (2), in which an amount of the isocyanate-based crosslinking agent relative to 100 parts by weight of the β-1,3-glucan derivative is 0.1 parts by weight or more and 10 parts by weight or less.

The present invention (4) includes an adhesive composition described in any one of (1) to (3), including a pressure-sensitive adhesive layer formed from the adhesive composition.

### EFFECTS OF THE INVENTION

The adhesive composition and the pressure-sensitive adhesive tape according to the present invention have high adhesive strength and also have high holding power under a high temperature atmosphere.

### BRIEF DESCRIPTION OF THE DRAWINGS

FIG. 1 is a cross-sectional view of one embodiment of a pressure-sensitive adhesive tape according to the present invention.
FIG. 2 is a cross-sectional view of another embodiment of the pressure-sensitive adhesive tape.
FIG. 3 is a cross-sectional view of another embodiment of the pressure-sensitive adhesive tape.
FIG. 4 is a schematic view illustrating measurement of a holding power in Example.

### DESCRIPTION OF THE EMBODIMENTS

### [Adhesive composition]

The adhesive composition of the present invention contains a β-1,3-glucan derivative and an isocyanate-based crosslinking agent.

### [β-1,3-glucan derivative]

The β-1,3-glucan derivative is a base polymer in the adhesive composition. The β-1,3-glucan derivative is a partially acylated compound in which a part of a hydroxyl group in glucose in β-1,3-glucan is acylated with an acyl group. That is, the P-1,3-glucan derivative is an acyl compound in which an acyl group is incorporated into β-1,3-glucan.

The acyl group is represented by RCO-. Examples of R include a hydrocarbon group. Examples of the hydrocarbon group include an aliphatic hydrocarbon group, an alicyclic hydrocarbon group, and an aromatic hydrocarbon group, and preferably, an aliphatic hydrocarbon group is used.

Examples of the aliphatic hydrocarbon group include a saturated aliphatic hydrocarbon group and an unsaturated aliphatic hydrocarbon group. Examples of the saturated aliphatic hydrocarbon group include an alkyl group. Examples of the alkyl group include a linear alkyl group and a branched alkyl group, and preferably, a linear alkyl group is used. The alkyl group has, for example, 3 or more carbon atoms, and for example, 18 or less carbon atoms. Examples of the linear alkyl group include propyl, butyl, pentyl, hexyl, heptyl, octyl, nonyl, decyl, undecyl, dodecyl, tridecyl, tetradecyl, pentadecyl, hexadecyl, heptadecyl, and octadecyl. Examples of the branched alkyl group include ethylhexyl.

Examples of the unsaturated aliphatic hydrocarbon group include an alkenyl group. The alkenyl group has, for example, 3 or more carbon atoms, and 18 or less carbon atoms. Examples of the alkenyl group include heptadecenyl.

The hydrocarbon group (R in RCO-) has preferably 7 or more carbon atoms, more preferably 9 or more carbon atoms, even more preferably 11 or more carbon atoms, and preferably 15 or less carbon atoms. When the number of carbon atoms of the hydrocarbon group exceeds the lower limit or is less than the upper limit, the adhesive strength can be sufficiently improved.

Specific examples of the acyl group include butanoyl (an example of RCO where R is C₃H₇), pentanoyl (an example of RCO where R is C₄H₉), hexanoyl (an example of RCO where R is C₅H₁₁), heptanoyl (an example of RCO where R is C₆H₁₃), octanoyl (an example of RCO where R is C₇H₁₅), nonanoyl (an example of RCO where R is C₈H₁₇), decanoyl (an example of RCO where R is C₉H₁₉), lauroyl (i.e., dodecanoyl) (an example of RCO where R is C₁₁H₂₃), myristoyl (i.e., tetradecanoyl) (an example of RCO where R is C₁₃H₂₇), palmitoyl (i.e., hexadecanoyl) (an example of RCO where R is C₁₅H₃₁), stearoyl (i.e., octadecanoyl) (an example of RCO where R is C₁₇H₃₅), oleoyl (an example of RCO where R is C₁₇H₃₃), and nonadecanoyl (an example of RCO where R is C₁₈H₃₇). Preferably, octanoyl, nonanoyl, decanoyl, lauroyl, myristoyl, and palmitoyl are used.

In the present invention, the lower limit of the degree of substitution of the acyl group in the β-1,3-glucan derivative is 2.6. When the degree of substitution of the acyl group is less than 2.6, the amount of residual hydroxyl groups in the β-1,3-glucan derivative is excessive. That is, interaction between the molecular chains of the β-1,3-glucan derivative becomes too strong. For this reason, the adhesive composition becomes hard. Then, the adhesive strength of the adhesive composition is lowered.

The degree of substitution of the acyl group can be referred to as DS. The degree of substitution of the acyl group in the β-1,3-glucan derivative is an average number of hydroxyl groups substituted by (introduced with) an acyl group among three hydroxyl groups in a β-1,3-glucan unit. Therefore, theoretically, the upper limit of the degree of substitution of the acyl group in the β-1,3-glucan derivative is 3.0.

In the present invention, the degree of substitution of the acyl group in the β-1,3-glucan derivative is less than 3.0. On the other hand, when the degree of substitution of the acyl group in the β-1,3-glucan derivative is 3.0, no hydroxyl group remains in the β-1,3-glucan derivative. For this reason, a crosslinking point is not created in the β-1,3-glucan derivative, and then, the β-1,3-glucan derivative is not crosslinked by the isocyanate-based crosslinking agent. Therefore, the holding power of the adhesive composition is lowered.

The β-1,3-glucan derivative has a degree of substitution of the acyl group of preferably 2.7 or more, 2.8 or more, and for example, 2.9 or less, preferably 2.8 or less.

Types, physical properties, and production methods of the β-1,3-glucan derivative are described in, for example, Japanese Unexamined Patent Publication No. 2018-154723. The degree of substitution of the acyl group in the β-1,3-glucan derivative is determined by ¹H-NMR. The measurement by ¹H-NMR is described in, for example, Japanese Unexamined Patent Publication No. 2015-124183.

A ratio of the P-1,3-glucan derivative in the adhesive composition is, for example, 80% by weight or more, and for example, 99.99% by weight or less.

### [Isocyanate-based crosslinking agent]

The isocyanate-based crosslinking agent is a crosslinking agent in which the β-1,3-glucan derivative is crosslinked by reaction with hydroxyl groups in the β-1,3-glucan derivative. In the meantime, an adhesive composition containing a crosslinking agent other than the isocyanate-based crosslinking agent, such as an oxazoline-based crosslinking agent, a carbodiimide-based crosslinking agent, and/or an epoxy-based crosslinking agent is not suitable in the present invention because of a reduction in adhesive strength or holding power.

Examples of the isocyanate-based crosslinking agent include an adduct-type isocyanate-based crosslinking agent, an isocyanurate-type isocyanate-based crosslinking agent, and an allophanate-type isocyanate-based crosslinking agent.

The isocyanate-based crosslinking agent is also classified according to the molecular structure of the isocyanate used as its raw material. Specifically, examples of the isocyanate-based crosslinking agent include a hexamethylene diisocyanate (HDI)-type crosslinking agent, a tolylene diisocyanate (TDI)-type crosslinking agent, a xylylene diisocyanate (XDI)-type crosslinking agent, and a hydrogenated xylylene diisocyanate (H6XDI) (also known as 1,3-bis(isocyanatomethyl)cyclohexane)-type crosslinking agent.

Examples of the HDI-type crosslinking agent include a trimethylolpropane adduct of HDI, an isocyanurate of HDI, an allophanate of HDI. Of these HDI-type crosslinking agents, preferably, an isocyanurate of HDI is used from the viewpoint of reducing the adhesive composition residue (or contamination of the adherend) that remains on the adherend.

Examples of the TDI-type crosslinking agent include a trimethylolpropane adduct of TDI, an isocyanurate of TDI, and an allophanate of TDI.

Examples of the XDI-type crosslinking agent include a trimethylolpropane adduct of XDI, an isocyanurate of XDI, and an allophanate of XDI.

Examples of the H6XDI-type crosslinking agent include H6XDI, a trimethylolpropane adduct of H6XDI, an isocyanurate of H6XDI, and an allophanate of H6XDI.

The above-described isocyanate-based crosslinking agents can be used alone or in combination of two or more.

As the isocyanate-based crosslinking agent, preferably, an HDI-type crosslinking agent, an XDI-type crosslinking agent, and a TDI-type crosslinking agent are used from the viewpoint of achieving high adhesive strength and high holding power.

The amount of the isocyanate-based crosslinking agent relative to 100 parts by weight of the β-1,3-glucan derivative is, for example, 0.01 parts by weight or more, preferably 0.1 parts by weight or more, more preferably 0.5 parts by weight or more, even more preferably 1.0 part by weight or more. When the amount of the isocyanate-based crosslinking agent relative to 100 parts by weight of the β-1,3-glucan derivative exceeds the above-described lower limit, the adhesive composition can have even higher holding power. In addition, the adhesive composition residue can be reduced.

The amount of the isocyanate-based crosslinking agent relative to 100 parts by weight of the β-1,3-glucan derivative is, for example, 20 parts by weight or less, preferably 10 parts by weight or less, more preferably 5.0 parts by weight or less, even more preferably 3.0 parts by weight or less. When the amount of the isocyanate-based crosslinking agent relative to 100 parts by weight of the β-1,3-glucan derivative is less than the above-described upper limit, the adhesive composition can have even higher adhesive strength. In addition, the adhesive composition residue can be reduced.

As the isocyanate-based crosslinking agent, commercially available products can be used.

### [Additive]

The adhesive composition may contain an additive at an appropriate ratio as long as the effects of the present invention are not impaired. Examples of the additive include other base polymers (acrylic resins), other crosslinking agents (oxazoline-based, carbodiimide-based, and epoxy-based crosslinking agents), tackifiers, viscosity modifiers, leveling agents, plasticizers, fillers, stabilizers, preservative agents, crosslinking accelerators, and antioxidants.

To produce the adhesive composition, the β-1,3-glucan derivative, the isocyanate-based crosslinking agent, and as necessary, an additive are blended and mixed. Alternatively, the above-described components can also be dissolved in a solvent to prepare a solution containing the adhesive composition. The type of the solvent is not limited. The solid content in the solution of the adhesive composition is, for example, 1% by weight or more, preferably 5% by weight or more, and for example, less than 50% by weight, preferably 30% by weight or less.

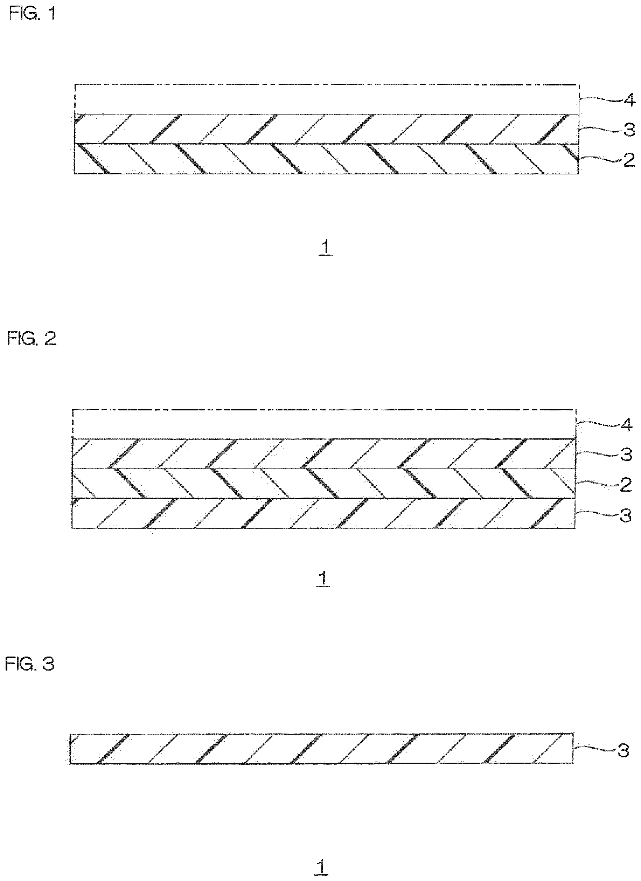

As shown in FIG. 1, a coating of the solution of the adhesive composition is applied onto a surface of a base material sheet 2, and thereafter dried to form a pressure-sensitive adhesive layer 3. The coating is heated as necessary during drying. The drying conditions are not limited as long as the β-1,3-glucan derivative can be crosslinked by allowing isocyanate groups of the isocyanate-based crosslinking agent to react with hydroxyl groups of the β-1,3-glucan derivative. For example, the coating solution of the adhesive composition is left stand at 100°C for, for example, 5 minutes or more, preferably 15 minutes or more. The upper limit of the leaving time is not limited.

In this manner, a pressure-sensitive adhesive tape 1 having the base material sheet 2 and the pressure-sensitive adhesive layer 3 can be produced.

Examples of a material of the base material sheet 2 include resin. Examples of the resin include polyester. The base material sheet 2 has a thickness of 0.5 µm or more, and for example, 900 µm or less.

The pressure-sensitive adhesive layer 3 has a thickness of, for example, 1 µm or more, and for example, 1000 µm or less. The thickness of the pressure-sensitive adhesive tape 1 is for example, 2 µm or more, and for example, 1100 µm or less.

Further, as shown in FIG. 2, the pressure-sensitive adhesive tape 1 can also include the base material sheet 2, and the pressure-sensitive adhesive layers 3 disposed on front and back surfaces of the base material sheet 2.

Alternatively, as shown in FIG. 3, a base material-less type pressure-sensitive adhesive tape 1 including the pressure-sensitive adhesive layer 3 alone without using the base material sheet 2 can also be obtained. The pressure-sensitive adhesive tape 1 is formed from the pressure-sensitive adhesive layer 3 alone.

### [Effects of adhesive composition and pressure-sensitive adhesive tape]

This adhesive composition contains a β-1,3-glucan derivative having a degree of substitution of the acyl group of 2.6 or more and less than 3.0, and an isocyanate-based crosslinking agent. Then, the β-1,3-glucan derivative is appropriately crosslinked by allowing isocyanate groups of the isocyanate-based crosslinking agent to react with hydroxyl groups corresponding to the above-described degrees of substitution of the acyl group. In this manner, the pressure-sensitive adhesive layer 3 having excellent adhesive strength and also having excellent holding power can be formed. Further, after the adhesive composition is adhered to an adherend and is then peeled off from the adherend, the adhesive composition residue on the adherend can be reduced.

### [Modified examples of pressure-sensitive adhesive tape]

In the modified example, the same reference numerals are provided for members and steps corresponding to each of those in one embodiment, and their detailed description is omitted. Further, the modified example can achieve the same function and effect as that of one embodiment unless otherwise specified. Furthermore, one embodiment and the modified examples thereof can be appropriately used in combination.

As shown in phantom lines in FIGS. 1 and 2, the pressure-sensitive adhesive tape 1 of the modified example further includes a release sheet 4 disposed on the surface of the pressure-sensitive adhesive layer 3.

### Example

Next, the present invention is further described based on Synthesis Examples, Examples, and Comparative Examples shown below. The present invention is however not limited by Synthesis Examples, Examples, and Comparative Examples. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF THE EMBODIMENTS". The "parts" and "%" are based on weight unless otherwise specified in the following description.

### [Synthesis of β-1,3-glucan derivative and measurement of degree of substitution of acyl group (DS)]

### Synthesis Example 1

### [Synthesis of myristoylated β-1,3-glucan (RCO where R has 13 carbon atoms) having a degree of substitution of acyl group of 2.7, and degree of substitution of myristoyl]

To a reaction vessel equipped with a condenser tube, a nitrogen inlet tube, a thermometer, and a stirrer, 13.3 g of β-1,3-glucan (Euglena Co., Ltd.: 82.0 mmol of glucose part) and 1000 mL of dehydrated pyridine (FUJIFILM Wako Pure Chemical Corporation) were added, and the mixture was stirred for 0.5 hours at a temperature of 60°C under a nitrogen atmosphere. To the obtained pyridine solution, 88.7 mL of myristoyl chloride (328.1 mmol: FUJIFILM Wako Pure Chemical Corporation) was added, and the mixture was heated to 60°C and then stirred for 1 hour. In this manner, a reaction mixture was prepared.

Thereafter, a solid intermediate was obtained from the reaction mixture. First, 1 hour after the start of the reaction, 2000 mL of methanol was added to the reaction mixture and cooled to room temperature. Then, a solid thus formed was taken out and then dissolved in 600 mL of toluene to prepare a toluene solution. The toluene solution was poured into 2000 mL of methanol under stirring to give a solid. By repeating the process of dissolving the solid in toluene and pouring the toluene solution into methanol 3 times, washing was performed to give a solid. The solid was dried at 60°C for 4 hours under reduced pressure.

In this manner, a myristoylated β-1,3-glucan was obtained. That is, the myristoylated β-1,3-glucan is a β-1,3-glucan derivative obtained by introducing myristoyl into β-1,3-glucan.

The degree of substitution of a myristoyl group in the myristoylated β-1,3-glucan was determined by ¹H-NMR. In ¹H-NMR, a signal of hydrogen atoms that form hydroxyl groups in a glucose unit and a signal of hydrogen atoms that form myristoyl (C₁₃H₂₇CO) are distinguished and are then detected. The degree of substitution of the myristoyl group (acyl group) was determined based on the integrals of these two signals. As a result, the degree of substitution (DS) was 2.7.

The degrees of substitution of the acyl group (DS) in the β-1,3-glucan derivatives in the following Synthesis Examples are determined in the same manner as above.

### Synthesis Example 2

### [Synthesis of myristoylated β-1,3-glucan (RCO where R has 13 carbon atoms) having a degree of substitution of acyl group of 2.8]

In the same manner as in Synthesis Example 1, a myristoylated β-1,3-glucan was obtained. However, the amount of myristoyl chloride mixed was changed from 88.7 mL (328.1 mmol) to 110.9 mL (410.1 mmol). The degree of substitution of the myristoyl group by ¹H-NMR was 2.8.

### Synthesis Example 3

### [Synthesis of myristoylated β-1,3-glucan (RCO where R has 13 carbon atoms) having a degree of substitution of acyl group of 2.9]

In the same manner as in Synthesis Example 1, a myristoylated β-1,3-glucan was obtained. However, the amount of myristoyl chloride mixed was changed from 88.7 mL (328.1 mmol) to 133.1 mL (492.2 mmol). The degree of substitution of the myristoyl group by ¹H-NMR was 2.9 according to ¹H-NMR.

### Comparative Synthesis Example 1

### [Synthesis of myristoylated β-1,3-glucan (RCO where R has 13 carbon atoms) having a degree of substitution of acyl group of 2.5]

In the same manner as in Synthesis Example 1, a myristoylated β-1,3-glucan was obtained. However, the amount of myristoyl chloride mixed was changed from 88.7 mL (328.1 mmol) to 66.5 mL (246.1 mmol). The degree of substitution of the myristoyl group was 2.5 according to ¹H-NMR.

### Synthesis Example 4

### [Synthesis of octanoylated β-1,3-glucan (RCO where R has 7 carbon atoms) having a degree of substitution of acyl group of 2.8]

In the same manner as in Synthesis Example 2, an octanoylated β-1,3-glucan having a degree of substitution of the acyl group of 2.8 was obtained. However, 70.0 mL (410.1 mmol) of octanoyl chloride was mixed instead of myristoyl chloride.

### Synthesis Example 5

### [Synthesis of lauroylated β-1,3-glucan (RCO where R has 11 carbon atoms) having a degree of substitution of acyl group of 2.8]

In the same manner as in Synthesis Example 2, a lauroylated β-1,3-glucan having a degree of substitution of the acyl group of 2.8 was obtained. However, 94.8 mL (410.1 mmol) of lauroyl chloride was mixed instead of myristoyl chloride.

### Synthesis Example 6

### [Synthesis of palmitoylated β-1,3-glucan (RCO where R has 15 carbon atoms) having a degree of substitution of acyl group of 2.8]

In the same manner as in Synthesis Example 2, a palmitoylated β-1,3-glucan having a degree of substitution of the acyl group of 2.8 was obtained. However, 124.4 mL (410.1 mmol) of palmitoyl chloride was mixed instead of myristoyl chloride.

The number of carbon atoms of R and the degree of substitution (DS) in each of Synthesis Examples and Comparative Synthesis Examples are shown in Table 1.

### [Production of pressure-sensitive adhesive tape]

### [Example 1]

The myristoylated β-1,3-glucan of Synthesis Example 1 was dissolved in toluene to prepare a toluene solution having a solids concentration of 10% by weight.

A CORONATE L (a trimethylolpropane adduct of tolylene diisocyanate, manufactured by Tosoh Corporation) as an isocyanate-based crosslinking agent was mixed to the toluene solution thus prepared. A solid content of the CORONATE L relative to 100 parts by weight of the solid content of the toluene solution (myristoylated β-1,3-glucan) was 1.0 part by weight. In this manner, a toluene solution of an adhesive composition was obtained.

The toluene solution of the adhesive composition was applied to a surface of a polyester base material (Toray Industries, Inc.: Lumirror S-10, thickness 25 µm) as a base material sheet 2 using an applicator (Tester Sangyo Co., Ltd.), and heated at 50°C for 5 minutes and then at 100°C for 5 minutes to dry the toluene solution. In this manner, a pressure-sensitive adhesive tape 1 including the base material sheet 2 and a pressure-sensitive adhesive layer 3 having a thickness of 50 µm was produced.

### [Examples 2 to 18 and Comparative Examples 1 to 4]

The pressure-sensitive adhesive tape 1 of each of Examples 2 to 18 and Comparative Examples 1 to 4 was produced in the same manner as in Example 1. However, the formulation of the toluene solution of the β-1,3-glucan derivative or the crosslinking agent was changed as follows. The changes are also shown in Tables 2 to 5.

### [Example 2]

The myristoylated β-1,3-glucan having a degree of substitution of the acyl group of 2.8 in Synthesis Example 2 was used instead of the myristoylated β-1,3-glucan having a degree of substitution of the acyl group of 2.7 in Synthesis Example 1. That is, the degree of substitution of the acyl group in the β-1,3-glucan derivative was changed to 2.8 in Example 2.

### [Example 3]

The myristoylated β-1,3-glucan having a degree of substitution of the acyl group of 2.9 in Synthesis Example 3 was used instead of the myristoylated β-1,3-glucan having a degree of substitution of the acyl group of 2.7 in Synthesis Example 1. That is, the degree of substitution of the acyl group in the β-1,3-glucan derivative was changed to 2.9 in Example 3.

### [Comparative Example 1]

The myristoylated β-1,3-glucan having a degree of substitution of the acyl group of 2.5 in Comparative Synthesis Example 1 was used instead of the myristoylated β-1,3-glucan having a degree of substitution of the acyl group of 2.7 in Synthesis Example 1. That is, the degree of substitution of the acyl group in the β-1,3-glucan derivative was changed to 2.5 in Comparative Example 1.

### [Example 4]

A CORONATE HL (a trimethylolpropane adduct of hexamethylene diisocyanate, manufactured by Tosoh Corporation) was used instead of the CORONATE L (a trimethylolpropane adduct of tolylene diisocyanate, manufactured by Tosoh Corporation).

### [Example 5]

A TAKENATE 110N (a trimethylolpropane adduct of xylylene diisocyanate, manufactured by Mitsui Chemicals, Inc.) was used instead of the CORONATE L (a trimethylolpropane adduct of tolylene diisocyanate, manufactured by Tosoh Corporation).

### [Example 6]

A TAKENATE 600 (a hydrogenated xylylene diisocyanate, manufactured by Mitsui Chemicals, Inc.) was used instead of the CORONATE L (a trimethylolpropane adduct of tolylene diisocyanate, manufactured by Tosoh Corporation).

### [Example 7]

A CORONATE HX (an isocyanurate of hexamethylene diisocyanate, manufactured by Tosoh Corporation) was used instead of the CORONATE L (a trimethylolpropane adduct of tolylene diisocyanate, manufactured by Tosoh Corporation).

### [Example 8]

A DURANATE A201H (an allophanate of hexamethylene diisocyanate, manufactured by Asahi Kasei Corporation) was used instead of the CORONATE L (a trimethylolpropane adduct of tolylene diisocyanate, manufactured by Tosoh Corporation).

### [Comparative Example 2]

An oxazoline-based crosslinking agent, EPOCROS WS-700 (manufactured by Nippon Shokubai Co., Ltd.) was used instead of the CORONATE L (a trimethylolpropane adduct of tolylene diisocyanate, manufactured by Tosoh Corporation).

### [Comparative Example 3]

A carbodiimide-based crosslinking agent, CARBODILITE V-04 (manufactured by Nisshinbo Chemical Inc.) was used instead of the CORONATE L (a trimethylolpropane adduct of tolylene diisocyanate, manufactured by Tosoh Corporation).

### [Comparative Example 4]

An epoxy-based crosslinking agent, DENACOL EX-810 (manufactured by Nagase ChemteX Corporation) was used instead of the CORONATE L (a trimethylolpropane adduct of tolylene diisocyanate, manufactured by Tosoh Corporation).

### [Example 9]

The amount of the isocyanate-based crosslinking agent relative to 100 parts by weight of the β-1,3-glucan derivative was changed from 1.0 part by weight to 0.1 parts by weight.

### [Example 10]

The amount of the isocyanate-based crosslinking agent relative to 100 parts by weight of the β-1,3-glucan derivative was changed from 1.0 part by weight to 0.5 parts by weight.

### [Example 11]

The amount of the isocyanate-based crosslinking agent relative to 100 parts by weight of the β-1,3-glucan derivative was changed from 1.0 part by weight to 2 parts by weight.

### [Example 12]

The amount of the isocyanate-based crosslinking agent relative to 100 parts by weight of the β-1,3-glucan derivative was changed from 1.0 part by weight to 3 parts by weight.

### [Example 13]

The amount of the isocyanate-based crosslinking agent relative to 100 parts by weight of the β-1,3-glucan derivative was changed from 1.0 part by weight to 5 parts by weight.

### [Example 14]

The amount of the isocyanate-based crosslinking agent relative to 100 parts by weight of the β-1,3-glucan derivative was changed from 1.0 part by weight to 10 parts by weight.

### [Example 15]

The amount of the isocyanate-based crosslinking agent relative to 100 parts by weight of the β-1,3-glucan derivative was changed from 1.0 part by weight to 20 parts by weight.

### [Example 16]

The octanoylated β-1,3-glucan of Synthesis Example 4 was used instead of the myristoylated β-1,3-glucan of Synthesis Example 1. That is, in Example 16, the acyl group in the β-1,3-glucan derivative was changed from myristoyl to octanoyl (RCO where R has 7 carbon atoms).

### [Example 17]

The lauroylated β-1,3-glucan of Synthesis Example 5 was used instead of the myristoylated β-1,3-glucan of Synthesis Example 1. That is, in Example 17, the acyl group in the β-1,3-glucan derivative was changed from myristoyl to lauroyl (RCO where R has 11 carbon atoms).

### [Example 18]

The palmitoylated β-1,3-glucan of Synthesis Example 6 was used instead of the myristoylated β-1,3-glucan of Synthesis Example 1. That is, the acyl group in the β-1,3-glucan derivative was changed from myristoyl to palmitoyl (RCO where R has 15 carbon atoms).

### [Evaluation]

The pressure-sensitive adhesive tapes 1 in Examples and Comparative Examples were evaluated with respect to the following items. The results are shown in Tables 2 to 5. The results of Example 2 were given in Tables 2, 4 and 5 for easy comparison to those of the other Examples.

### [Adhesive strength to stainless steel plate and polypropylene plate]

The pressure-sensitive adhesive tape 1 was cut into a size of 20 mm wide and 70 mm long to produce a sample. Then, the pressure-sensitive adhesive layer 3 of the pressure-sensitive adhesive tape 1 was pressure-bonded to an adherend made of a stainless steel plate by reciprocating a 2 kg roller in an environment of 23°C and 50% RH. Further, the sample was allowed to stand for 30 minutes in the same environment. Thereafter, the "adhesive strength to the stainless steel plate" was obtained by measuring a peel force (N/20 mm) when the sample was peeled off at a peel rate of 300 mm/min and a peel angle of 180° using a universal tensile testing machine, Autograph AG-IS (Shimadzu Corporation). The adhesive strength was measured in an environment of 23°C and 50% RH.

The adherend was changed to a polypropylene plate and the "adhesive strength to the polypropylene plate" was obtained.

### [Holding power]

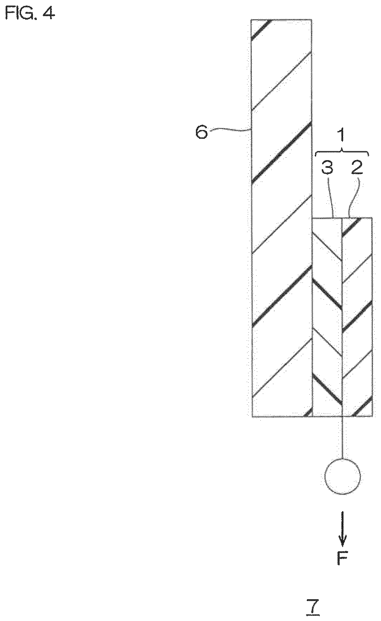

The pressure-sensitive adhesive tape 1 was cut into a size of 10 mm wide and 100 mm long. Then, an adhesive face was pressure-bonded to an adherend 6 made of a Bakelite plate by reciprocating a 2 kg roller once so as to have an adhesive area of 10 mm wide and 20 mm long. Accordingly, as shown in FIG. 4, an adhered sample 7 was produced.

The adhered sample 7 was left stand for 30 minutes in an atmosphere at 23°C and then further left stand for 30 minutes in an atmosphere at 80°C. Subsequently, a 0.5 kg load was hung from the lower end portion of the pressure-sensitive adhesive tape 1. After the adhered sample 7 in such a state was left stand for 1 hour (60 minutes) in an atmosphere at 80°C, a length (mm) of displacement of the pressure-sensitive adhesive tape 1 relative to the adherend 6 was measured, and the measurement result was obtained as "holding power". When the pressure-sensitive adhesive tape 1 was fallen during the test, the falling time (min.) was noted.

### [Contamination of adherend]

The pressure-sensitive adhesive tape 1 was cut into a size of 20 mm wide and 70 mm long to produce a sample 5. The pressure-sensitive adhesive layer 3 of the sample was pressure-bonded to an adherend 6 made of stainless steel by reciprocating a 2 kg roller in an environment of 23°C and 50% RH. The sample was allowed to stand for 1 week in a constant temperature/humidity chamber at 85°C and then cooled to room temperature. The pressure-sensitive adhesive tape 1 was peeled off from the adherend 6 and thereafter, the adherend 6 was observed.

The presence or absence of the adhesive composition residue, that is, contamination of the adherend 6 caused by the adhesive agent was observed based on the following criteria.

Contaminated: A white adhesive composition was found.

Not contaminated: A white adhesive composition was not found.

### [Table 1]

**[TABLE 1]**

| | | Syn. Ex. 1 | Syn. Ex. 2 | Syn. Ex. 3 | Comp. Syn. Ex. 1 | Syn. Ex. 4 | Syn. Ex. 5 | Syn. Ex. 6 |
|---|---|---|---|---|---|---|---|---|
| Acyl group | Number of carbon atoms of R in RCO | 13 | 13 | 13 | 13 | 7 | 11 | 15 |
| | Type | Myristoyl | Myristoyl | Myristoyl | Myristoyl | Octanoyl | Lauroyl | Palmitoyl |
| | Degree of substitution (DS) | 2.7 | 2.8 | 2.9 | 2.5 | 2.8 | 2.8 | 2.8 |

### [Table 2]

**[TABLE 2]**

| | | Ex. 1 | Ex. 2 | Ex. 3 | Comp. Ex. 1 |
|---|---|---|---|---|---|
| β-1,3-glucan derivative | Synthesis Example/ Comparative Synthesis Example | Syn. Ex. 1 | Syn. Ex. 2 | Syn. Ex. 3 | Comp. Syn. Ex. 1 |
| | Number of carbon atoms of R in acyl group (RCO) | 13 | 13 | 13 | 13 |
| | Type of acyl group | Myristoyl | Myristoyl | Myristoyl | Myristoyl |
| | Degree of substitution (DS) | 2.7 | 2.8 | 2.9 | 2.5 |
| Isocyanate-based crosslinking agent | Type | Trimethylolpropane adduct of TDI | Trimethylolpropane adduct of TDI | Trimethylolpropane adduct of TDI | Trimethylolpropane adduct of TDI |
| | Trade name | CORONATE L | CORONATE L | CORONATE L | CORONATE L |
| | Parts by weight relative to 100 parts by weight of β-1,3-glucan derivative | 1.0 | 1.0 | 1.0 | 1.0 |
| Evaluation | Adhesive strength to polypropylene plate (N/20 mm) | 0.7 | 0.8 | 1.5 | 0.1 |
| | Adhesive strength to stainless steel plate (N/20 mm) | 0.8 | 0.9 | 0.6 | 0.1 |
| | Holding power (mm/hr) | 0.1 | 0.1 | 0.2 | 0.1 |
| | Contamination of adherend | Not contaminated | Not contaminated | Not contaminated | Not contaminated |

### [Table 3]

**[TABLE 3]**

| | | Ex. 2 | Ex. 4 | Ex. 5 | Ex. 6 | Ex. 7 | Ex. 8 | Comp. Ex. 2 | Comp. Ex. 3 | Comp. Ex. 4 |
|---|---|---|---|---|---|---|---|---|---|---|
| β-1,3-glucan derivative | Number of carbon atoms of R in acyl group (RCO) | 13 | 13 | 13 | 13 | 13 | 13 | 13 | 13 | 13 |
| | Degree of substitution of acyl group (DS) | 2.8 | 2.8 | 2.8 | 2.8 | 2.8 | 2.8 | 2.8 | 2.8 | 2.8 |
| Crosslinking agent | Type | Tri methylol-propane adduct of TDI | Trimethylolpropane adduct of HDI | Trimethylolpropane adduct of XDI | H6XDI | Isocyanurate of HDI | Allophanate of HDI | Oxazoline-based | Carbodiimide-based | Epoxy-based |
| | Trade name | CORONATE L | CORONATE HL | TAKENATE 110N | TAKENATE 600 | CORONATE HX | DURANATE A201H | EPOCROS WS-700 | CARBODILITE V-04 | DENACOL EX-810 |
| | Parts by weight relative to 100 parts by weight of β-1,3-glucan derivative | 1.0 | 1.0 | 1.0 | 1.0 | 1.0 | 1.0 | 1.0 | 1.0 | 1.0 |
| Evaluation | Adhesive strength to polypropylene plate (N/20 mm) | 0.8 | 1.1 | 1.0 | 0.7 | 1.0 | 0.8 | 0.7 | 1.4 | 0.8 |
| | Adhesive strength to stainless steel plate (N/20 mm) | 1.0 | 1.1 | 1.2 | 1.0 | 1.4 | 1.5 | 1.2 | 1.3 | 0.6 |
| | Holding power (mm/hr) | 0.1 | 0.2 | 0.3 | 0.1 | 0.1 | 0.1 | Fallen after 4 min. | Fallen after 10 min. | 0.4 |
| | Contamination of adherend | Not contaminated | Contaminated | Not contaminated | Not contaminated | Not contaminated | Contaminated | Contaminated | Contaminated | Not contaminated |

### [Table 4]

**[TABLE 4]**

| | | Ex. 9 | Ex. 10 | Ex. 2 | Ex. 11 | Ex. 12 | Ex. 13 | Ex. 14 | Ex. 15 |
|---|---|---|---|---|---|---|---|---|---|
| β-1,3-glucan derivative | Number of carbon atoms of R in acyl group (RCO) | 13 | 13 | 13 | 13 | 13 | 13 | 13 | 13 |
| | Degree of substitution of acyl group (DS) | 2.8 | 2.8 | 2.8 | 2.8 | 2.8 | 2.8 | 2.8 | 2.8 |
| Crosslinking agent | Type | Trimethylolpropane adduct of TDI | Trimethylolpropane adduct of TDI | Trimethylolpropane adduct of TDI | Trimethylolpropane adduct of TDI | Trimethylolpropane adduct of TDI | Trimethylolpropane adduct of TDI | Trimethylolpropane adduct of TDI | Trimethylolpropane adduct of TDI |
| | Trade name | CORONATE L | CORONATE L | CORONATE L | CORONATE L | CORONATE L | CORONATE L | CORONATE L | CORONATE L |
| | Parts by weight relative to 100 parts by weight of β-1,3-glucan derivative | 0.1 | 0.5 | 1.0 | 2.0 | 3.0 | 5.0 | 10 | 20 |
| Evaluation | Adhesive strength to polypropylene plate (N/20 mm) | 0.8 | 0.8 | 0.8 | 0.9 | 0.9 | 0.4 | 0.3 | 0.1 |
| | Adhesive strength to stainless steel plate (N/20 mm) | 1.3 | 1.0 | 0.9 | 0.9 | 1.1 | 0.7 | 0.7 | 0.3 |
| | Holding power (mm/hr) | 0.8 | 0.2 | 0.1 | 0.1 | 0.1 | 0.1 | 0.1 | 0.1 |
| | Contamination of adherend | Contaminated | Not contaminated | Not contaminated | Not contaminated | Not contaminated | Not contaminated | Contaminated | Contaminated |

### [Table 5]

**[TABLE 5]**

| | | Ex. 16 | Ex. 17 | Ex. 2 | Ex. 18 |
|---|---|---|---|---|---|
| β-1,3-glucan derivative | Synthesis Example/ Comparative Synthesis Example | Syn. Ex. 4 | Syn. Ex. 5 | Syn. Ex. 1 | Syn. Ex. 6 |
| | Number of carbon atoms of R in acyl group (RCO) | 7 | 11 | 13 | 15 |
| | Type of acyl group | Octanoyl | Lauroyl | Myristoyl | Palmitoyl |
| | Degree of substitution (DS) | 2.8 | 2.8 | 2.8 | 2.8 |
| Crosslinking agent | Type | Trimethylolpropane adduct of TDI | Trimethylolpropane adduct of TDI | Trimethylolpropane adduct of TDI | Trimethylolpropane adduct of TDI |
| | Trade name | CORONATE L | CORONATE L | CORONATE L | CORONATE L |
| | Parts by weight relative to 100 parts by weight of β-1,3-glucan derivative | 1.0 | 1.0 | 1.0 | 1.0 |
| Evaluation | Adhesive strength to polypropylene plate (N/20 mm) | 0.1 | 0.4 | 0.8 | 0.5 |
| | Adhesive strength to stainless steel plate (N/20 mm) | 0.4 | 0.6 | 0.9 | 0.8 |
| | Holding power (mm/hr) | 0.1 | 0.05 | 0.1 | 0.1 |
| | Contamination of adherend | Not contaminated | Not contaminated | Not contaminated | Not contaminated |

While the illustrative embodiments of the present invention are provided in the above-described invention, such is for illustrative purpose only and it is not to be construed restrictively. Modification and variation of the present invention that will be obvious to those skilled in the art is to be covered by the following claims.

### Industrial Applicability

The adhesive composition serves as a material for a pressure-sensitive adhesive layer provided in a pressure-sensitive adhesive tape.

### Description of Reference Numerals

- 1: pressure-sensitive adhesive tape
- 2: base material sheet
- 3: pressure-sensitive adhesive layer

## Claims

1. An adhesive composition comprising:
a β-1,3-glucan derivative obtained by introducing an acyl group into β-1,3-glucan, the β-1,3-glucan derivative having a degree of substitution of the acyl group of 2.6 or more and less than 3.0; and
an isocyanate-based crosslinking agent.

2. The adhesive composition according to claim 1, wherein the isocyanate-based crosslinking agent is at least one selected from the group consisting of an adduct-type isocyanate-based crosslinking agent, an isocyanurate-type isocyanate-based crosslinking agent, and an allophanate-type isocyanate-based crosslinking agent.

3. The adhesive composition according to claim 1 or 2, wherein an amount of the isocyanate-based crosslinking agent relative to 100 parts by weight of the β-1,3-glucan derivative is 0.1 parts by weight or more and 10 parts by weight or less.

4. A pressure-sensitive adhesive tape, comprising a pressure-sensitive adhesive layer formed from the adhesive composition according to any one of claims 1 to 3.
